(19) Europäisches Patentamt
European Patent Office
Office européen des brevets

(11) **EP 1 739 865 A1**

(12) **EUROPEAN PATENT APPLICATION**

(43) Date of publication:
**03.01.2007 Bulletin 2007/01**

(51) Int Cl.:
*H04B 10/18* (2006.01)     *H04B 10/155* (2006.01)

(21) Application number: **05014381.7**

(22) Date of filing: **01.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SIEMENS AKTIENGESELLSCHAFT 80333 München (DE)**

(72) Inventors:
• **Cartaxo, Adolfo**
  **2810-293 Feijo (PT)**
• **Fonseca, Daniel**
  **1350-167 Lisbon (PT)**
• **Monteiro, Paulo**
  **3830-209 Ilhavo (PT)**

(54) **Method for transmitting a data signal and optical communication system with dispersion precompensation**

(57)     From the data signal (DS) is a predistorted modulation signal (MDS) by an electrical precompensator (EDC) derived having properties of a phase shifting filter that substantially mitigates the influence of dispersion ($D_c$) imparted to the to the optical communication signal (OSSB) by the optical communication system. The predistorted modulation signal (MDS) is used to modulate an optical carrier signal (CW) to generate a corresponding predistorted optical single sideband communication signal (OSSB) for transmission over the communication system.

FIG 1

EP 1 739 865 A1

## Description

The invention is related to a method and a system for transmitting a data signal with dispersion precompensation according to claim 1 and claim 11 respectively.

Waveguide Dispersion, also known as Group Velocity Dispersion or Chromatic Dispersion, occurs in a transmitting fiber and is one of the most performance limiting effects in optical transmission systems.

Dispersion (first order) is the derivative of the time delay of the optical path with respect to wavelength. Most of the worldwide deployed optical fibers are standard single mode fibers (SSMF), which have a significant dispersion. Therefore dispersion produces significant distortion of the transmitted signals, limiting the overall performance of the communication system, which results in reduced signal quality or in a reduced regenerator free transmission distance.

Different techniques have been proposed and applied to mitigate the effect of fiber dispersion.

The most common way is to insert a "Dispersion Compensating Fiber" DCF into the transmission path for broadband dispersion compensation. Other arrangements use optical filters, which are e.g. designed as Bragg-filters or Transversal Filters.

An alternative technique to mitigate the effect of fiber dispersion is the use of spectrally efficient optical modulation formats. While the occupied spectral bandwidth of the modulated signal is reduced, the impact of dispersion is also reduced.

Also electrical compensation is used after optical-electrical conversion at the receiver and a combination of the compensation method. In "Journal of Lightwave Technology", Vol. 17, No. 10, October 1999, pages 1742 - 1749 "Optical Single Sideband Transmission at 10 Gbit/s Using Only Electrical Dispersion Compensation" Mike Sieben et al. describe a combination of single sideband modulation and electrical compensation using a micro strip at the receiving side.

The performance of this method is not sufficient for long distance communication.

A further technique to mitigate dispersion is described in the Nortel Networks Limited Patent Application WO 2004/32385 A1 and based on memorising several samples of data bits and calculating an electrical predistorted control signal, which controls an optical modulator. The predistorted control signal is than converted into a corresponding predistorted optical communication signal. A compensation function, which is used to filter a digital input signal, is derived from successive data bits (at least four), which are used as an address to read the predistorted control signal out of a storage. The compensation function can be altered according to dispersion measurements by writing new values into the storage. This technique is very complicated and can not be used for high speed transmission without an expensive realisation.

An object of the present invention is to provide an improved and cost-effective technique for dispersion compensation.

This object is met by the method steps and the system elements defined in the independent claims.

Option method steps and option elements are defined in the dependent claims.

A main advantage of the invention is that the dispersion compensator is easy to realize. Because the precompensation is controlled in the electrical domain but performed in the optical domain, this method is superior to electrical in the electrical domain compensation after common optical-electrical conversion.

A combination with single sideband modulation leads to an unsuspected improvement of the transmission quality. The length of the transmission link can be extended without using optical dispersion compensation (DCF-fibers).

Another advantage is the possibility to use carrier free modulation such as AMI coded signals. This leads to an additional improvement of the transmission performance.

Only the low spectral bandwidth for a common single sideband modulation is also necessary with precompensation.

Embodiments of the present invention will now be described, by way of example only, with reference to the attached drawings, wherein

Fig. 1    shows a block diagram schematically illustrating an optical communication system according to the present invention,

Fig. 2    shows a block diagram of a single sideband modulator,

Fig. 3    shows the "eye opening penalty" EOP for an embodiment of the communication system,

Fig. 4    shows the EOP for a preferred embodiment of the communication system with AMI coded data signal,

Fig. 5    shows the "eye opening penalty" EOP for the preferred AMI communication system,

Fig. 6    shows a further embodiment of the communication system for adaptive dispersion compensation,

Fig. 7    shows the Q-factor for an OSSB-RZ communication signal,

Fig. 8    shows the Q-factor for an AMI-OSSB-RZ communication signal.

The invention is described for a single channel. Of course this invention can be used for wavelength multiplex communication systems.

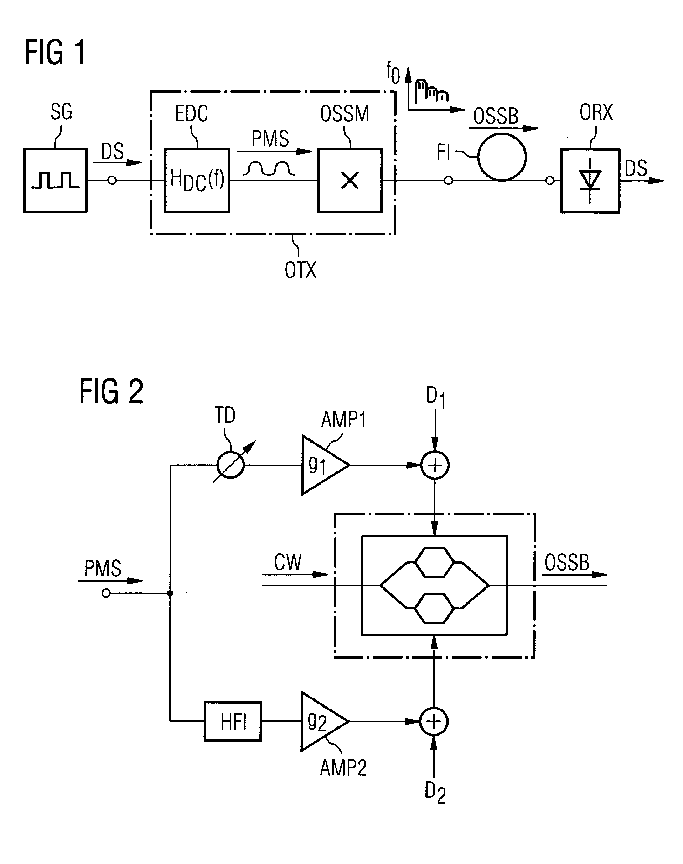

**Fig. 1** shows at an optical transmitter OTX comprising an electrical dispersion compensator EDC and an optical single sideband modulator OSSM connected in series.

A signal generator SG generates a binary data signal DS, which is fed to the electrical precompensator EDC. A transfer function $H_{DC}$(f) of the electrical dispersion precompensator converts the data signal DS into a "predistorted" modulation signal PMS, which generates a precompensated optical single sideband communication signal OSSB by modulating a carrier signal in the single sideband modulator OSSM. The carrier signal is usually generated by a laser (not shown).

The transfer function of the electrical dispersion precompensator EDC is given by:

$$H_{DC}(f) = \begin{cases} \exp\left[-\dfrac{j*\pi*\lambda^2*f^2*D_c}{c}\right], f \geq 0 \\ \exp\left[\dfrac{j*\pi*\lambda^2*f^2*D_c}{c}\right], f < 0 \end{cases}$$

Where f is the frequency, $\lambda$ the operating wavelength (carrier frequency $f_0$), c is the light velocity, $D_c$ the dispersion of the communication system (fiber).

That means electrical dispersion precompensator EDC has the properties of a frequency depending phase shifting filter (all-pass filter). The working (cut off) frequency f can be limited to a value about 2 ... 4 times the frequency of the data signal having a 1010 data sequence. Of course, another frequency depending function, e.g. for correction of nonlinear effects correcting can be superimposed, if single sideband modulation can be maintained.

The electrical precompensator EDC can be realized simply with e.g. a (analog) transversal or Butterworth filter. A preferred solution for a fixed "compensation transmission line" is an electrical dispersive line like a microstrip. Dimensioning of the microstrip is very simple. A certain dispersion of the fiber - according to the formula - corresponds with a certain length of the microstrip. The amount of dispersion precompensated by the EDC is the same as the fiber dispersion of the optical link.

The predistorted modulation signal PMS can be used for modulating a conventional optical modulator and afterwards extracting one sideband by a bandpass filter, or the predistorted modulation signal PMS is fed to a single sideband modulator as shown in **Fig. 2**. The modulation signal PMS is split into two parts. A first part is fed over a Hilbert-Filter HFI to a first modulation signal input. The ideal transfer function of the Hilbert-Filter HFI is $H_{HI}$ = j sgn f; this means a constant phase shift. A second part of the modulation signal PMS is fed over a time delay to a second modulation signal input to compensate the delay of the electrical components. The signal parts are amplified by amplifiers AMP1 and AMP2 and the control voltage is corrected by $D_1$ and $D_2$ to bias the optical-electrical structure. A constant wave signal CW, the carrier signal, is fed to a further input of the modulator. The single side band modulator generates the optical single sideband signal OSSB. Its function is kwon too one skilled in the art and e.g. published in a conference by IEEE/LEOS and in the Patent US 6,292,598 B1. In principle all kind of single sideband modulation formats can be used.

The precompensated optical communication signal OSSB is transmitted over a transmission link, an optical fiber FI, to an optical receiver ORX. In the case of amplitude modulation the receiver is an optical-electrical converter, for phase or frequency modulated signals are suitable demodulators also well known.

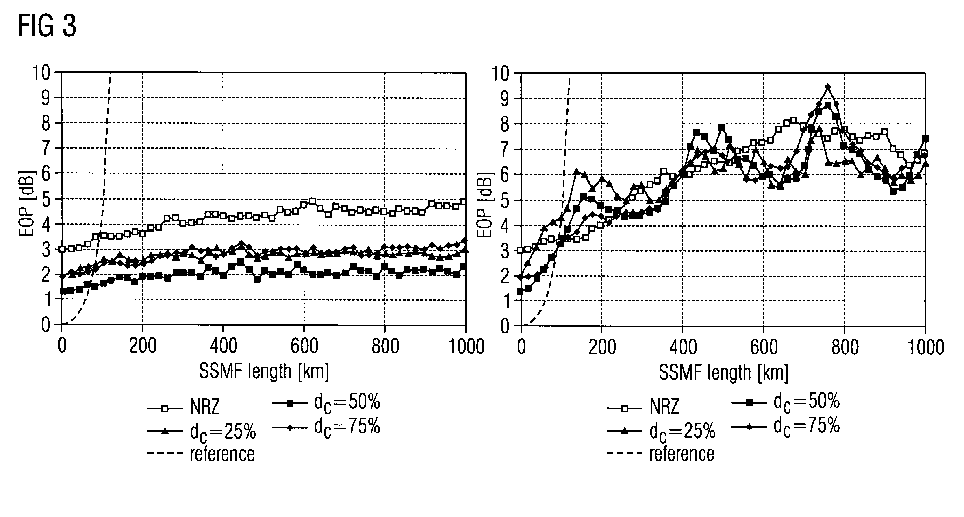

In **Fig. 3** the eye opening penalty EOP is used to show the performance of the communication system for different duty cycles $d_c$ compared with a system with electrical dispersion compensation as suggested by Mike Sieben et al. The optical power fed into each span is identical in all cases.

The best performance of the system with a real transmitter (simulated) and a single mode fiber SSFM is achieved using "return to zero modulation" RZ with a duty cycle of $d_c \approx$ 50%. The optimum duty cycle varies with the embodiment of the transmitter and its maximum working frequency. The worst performance has NRZ modulation due to symbol interfference.Fig.3 shows only a small increase with the length of th SSM-fiber for smal duty cycles. This indicates, that the fiber dispersion is perfect compensated. The performance using NRZ coding can be improved when other types of single sideband modulators are used.

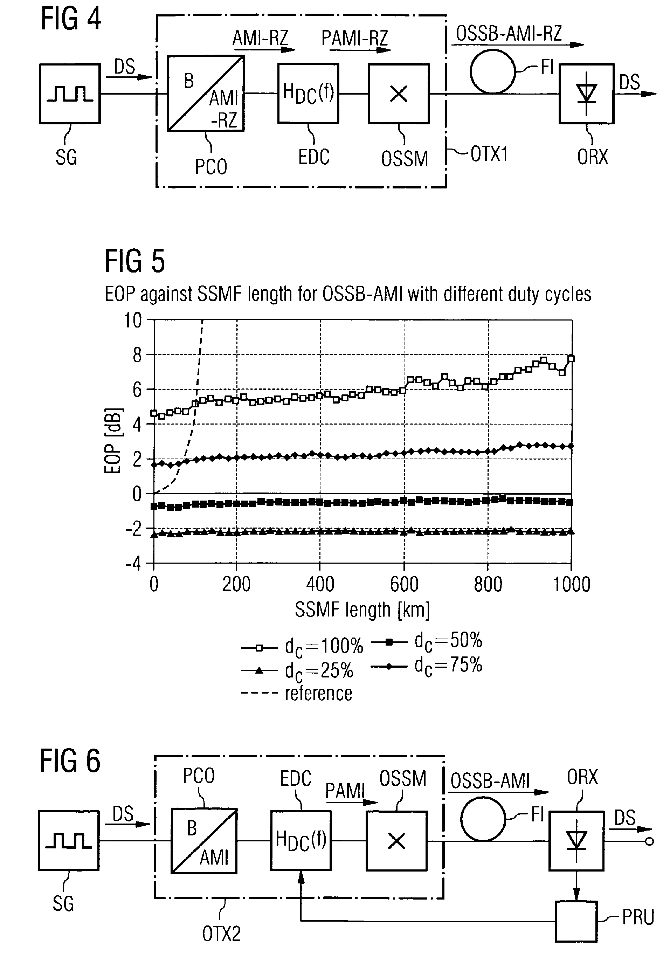

With other types of single sideband modulators **Fig. 4** shows a preferred embodiment of the communication system with a precoder PCO at the transmitter side OTX1 connected in series with the data signal generator SG and upstream the dispersion precompensator EDC. The precoder PCO converts the binary data signals e.g. into AMI coded signals AMI-RZ. This ternary coding is well known, every second logical 1 of the data signal is converted to a logical -1 and the logical 0 remains a logical 0. The AMI coded signal is predistorted by the dispersion compensator and the predistorted signal PAMI-RZ generates an optical communication signal OSSB-AMI-RZ, where the phase of the optical signal is inverted according every second logical 1 of the data signal. The precoder or a further circuit can determine the duty cycle of the AMI communication signal. In this embodiment the AMI coding is combined with return to zero RZ coding. Other solutions and arrangements are also possible, e.g. for optical ternary modulation described in the application DE 199 26 124 A1 or in the Journal of Lightwave Technology, Vol.16, NO. 5, May 1998, pages 788 - 796.

The results are shown in **Fig. 5.** With a duty cycle of ca. dc = 0,5 or less, the dispersion does not limit the length of the communication link. Therefore a duty cycle of ca. $d_c$ = 0,5 or less should be chosen considering other requirements of the communication system. Because the average transmission power is the same, the higher peak power of the communication signal has to be taken into account and the necessary higher cut of frequencies.

Precompensation according to the invention is possible for each kind of single sideband modulation and for all binary, ternary or codes with more steps. The best results so far known were achieved with AMI coding combined with RZ coding.

According to **Fig. 6** adaptive precompensation is also possible. In the communication system shown in Fig. 6 with a transmitter OTX2 the dispersion respectively the signal quality is measured by a processor unit PRU at the receiver side. The processor unit PRU also controls the dispersion precompensator EDC of the OTX2 over a service channel SCH and optimises the precompensation. According to the formula, only $D_c$ has to be changed to adapt the dispersion precompensator, e.g. a filter. Of course, the value of $D_c$ can also be calculated from a known transmission link, so that even in a switched network a good compensation is achieved. As a variation of the embodiment OSSB-AMI not return to zero (NRZ) communication signals are transmitted in this embodiment.

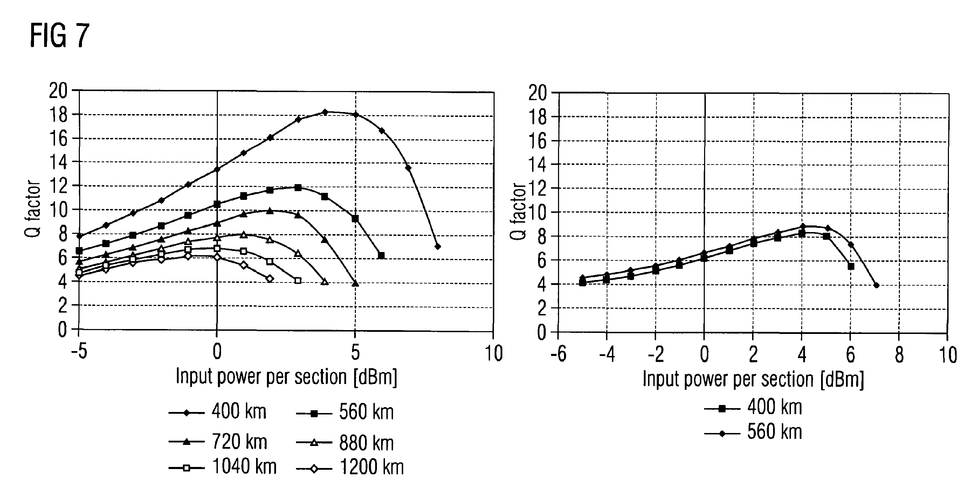

**Fig. 7** shows the improvement of transmission quality using our invention for OSSB-RZ modulation compared with the communication system proposed by M. Sieben et al. In these diagrams the non-linear effects are also considered, while for the performance diagrammed in Fig. 3 and 5 only linear transmission was considered. The assumed link properties section length are: section (span) length 80 km, attenuation coefficient 0,2 dB/km, non-linearity coefficient 1,62 (Wxkm)[-1] W = Watt, EDFA noise figure 6dB. The diagrams show the Q factor as a function of the input power of a section (span). The optimal input power of the communication signal for all (equal) sections can be chosen according to the length of the complete transmission link by using this diagram taking into account the other requirements of the communication system.

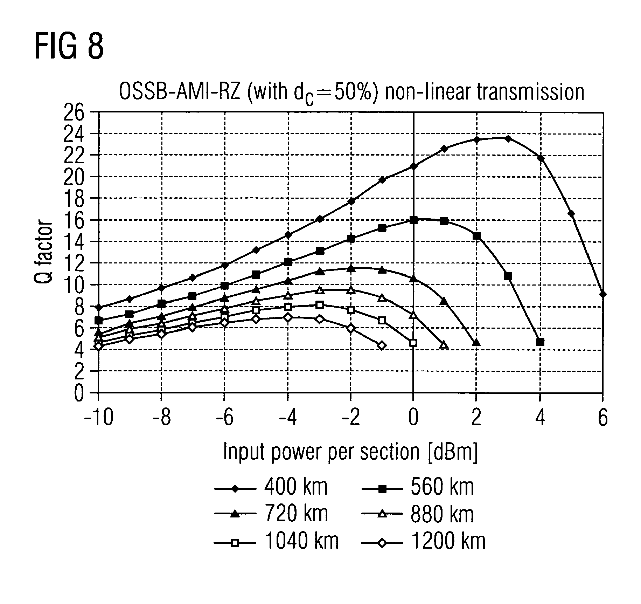

**Fig. 8** shows the Q-factor when OSSB-AMI-RZ with $d_c$ = 0,5 is used. That communication signals lead even too a better performance. The maximum SSMF transmission distance without optical dispersion compensation with a DCF (dispersion compensating fiber) is about 300 km. With the invention using OSSM-AMI-RZ communication signals a maximum transmission distance of 1200 km is expected without additional optical dispersion compensation with a bit error rate lower than 10[-12].

**Claims**

1.  Method for transmitting a data signal (DS) in an optical communication system,
    comprising the steps of
    deriving a predistorted modulation signal (MDS) from the data signal (DS) by an electrical precompensator (EDC) having properties of a phase shifting filter that substantially mitigates the influence of dispersion ($D_c$) imparted to the to the optical communication signal (OSSB) by the optical communication system and
    modulating an optical carrier signal (CW) by the predistorted modulation signal (PMS) to generate a corresponding predistorted optical single sideband communication signal (OSSB) for transmission over the communication system.

2.  Method according to claim 1,
    **characterized in that**
    the transfer function of the precompensator (EDC) is or

$$\texttt{comprises:}\ H_{DC}(\texttt{f}) = \begin{cases} \exp\left[-\dfrac{j * \pi * \lambda^2 * f^2 * D_c}{c}\right], f \geq 0 \\ \exp\left[\dfrac{j * \pi * \lambda^2 * f^2 * D_c}{c}\right], f < 0 \end{cases} ;$$

    where f is the frequency, $\lambda$ the operating wavelength, c is the light velocity, $D_c$ the dispersion of the communication system (fiber).

3.  Method according to claim 2,

**characterized in that**
return to zero modulation is used with a duty cycle d$_c$ = 0,4 - 0,6.

4. Method according to claim 2,
   **characterized in that**
   the data signal (DS) is AMI coded and a predistorted AMI modulation signal (PAMIS) is derived from the AMI coded signal (AMIS).

5. Method according to claim 4,
   **characterized in that**
   an AMI single sideband return to zero communication signal (OSSB-AMI-RZ) is generated.

6. Method according to claim 4,
   **characterized in that**
   **that** the AMI single sideband return to zero communication signal (OSSB-AMI-RZ) is generated with a duty cycle between 0,55 and 0,2 .

7. Method according to claim 4,
   **characterized in that**
   the AMI single sideband return to zero communication signal (OSSB-AMI-RZ) is generated with a duty cycle (d$_c$) between 0,25 and 0,1.

8. Method according to an preceding claim,
   **characterized in that**
   an optimal communication signal power input into a fiber (FI) is chosen according to the length and properties of a transmission link (FIB).

9. Method according to claim 8,
   **characterized in that**
   the communication signal input power of the communication signal for NRZ coding is between 0 and 8 dBm.

10. Method according to claim 8,
    **characterized in that**
    the communication signal input power for RZ is chosen between 0 and 8 dBm.

11. Optical communication system with dispersion precompensation for transmitting a data signal (DS),
    **characterized in that**
    the transmitter (OTX) is containing an electrical dispersion precompensator (EDC) having properties of a phase shifting filter, that receives the data signal (DS) and generates a predistorted modulation signal (PMS), that substantially mitigates the influence of dispersion (D$_c$) imparted to an optical communication signal (OSSB) by the optical communication system
    and containing a single sideband modulator (SSBM) connected in series with the dispersion precompensator (EDC) for modulating an optical carrier signal (CW) by the predistorted modulation signal (PMS) to generate a corresponding predistorted optical single sideband communication signal (OSSB) for transmission over the communication system.

12. Optical communication system according to claim 11,
    **characterised in that**
    the dispersion precompensator (EDC) has or comprises the transfer function

$$H_{DC}(f) = \begin{cases} \exp\left[-\dfrac{j * \pi * \lambda^2 * f^2 * D_c}{c}\right], f \geq 0 \\ \exp\left[\dfrac{j * \pi * \lambda^2 * f^2 * D_c}{c}\right], f < 0 \end{cases} ;$$

where f is the frequency, $\lambda$ the operating wavelength (carrier frequency), c is the light velocity, $D_C$ the dispersion of the communication system (fiber).

13. Optical communication system according to claim 11,
    **characterised in that**
    the dispersion precompensator (EDC) is realized as a transversal or Butterworth-filter.

14. Optical communication system according to claim 11,
    **characterised in that**
    the dispersion precompensator (EDC) is realized as an electrical dispersive line.

15. Optical communication system according to claim 11,
    **characterised in that**
    a precoder (PCO) is connected in series with the dispersion precompensator (EDC) for converting the data signal (DS) into an AMI-signal (AMIS).

16. Optical communication system according to claim 11 or claim 15,
    **characterised in that**
    the precoder (PCO) is designed to generate RZ or AMI-RZ communication signals (OSSB-RZ; OSSB-AMI-RZ).

FIG 1

FIG 2

FIG 3

# FIG 4

AMI-RZ →    PAMI-RZ →    OSSB-AMI-RZ →

DS →

SG

PCO    EDC    OSSM    OTX1

FI    ORX    DS →

$B$ / AMI-RZ    $H_{DC}(f)$    ×

# FIG 5

EOP against SSMF length for OSSB-AMI with different duty cycles

EOP [dB] vs SSMF length [km]

$d_C = 100\%$    $d_C = 50\%$
$d_C = 25\%$    $d_C = 75\%$
- - - - reference

# FIG 6

PCO    EDC    OSSM    OSSB-AMI →    ORX

DS →

SG

PAMI →

$B$ / AMI    $H_{DC}(f)$    ×

FI    DS →

OTX2    PRU

9

FIG 7

Left graph: Q factor vs Input power per section [dBm]
400 km, 560 km, 720 km, 880 km, 1040 km, 1200 km

Right graph: Q factor vs Input power per section [dBm]
400 km, 560 km

EP 1 739 865 A1

## FIG 8

OSSB-AMI-RZ (with $d_C = 50\%$) non-linear transmission

Input power per section [dBm]

—◆— 400 km  —■— 560 km
—▲— 720 km  —△— 880 km
—□— 1040 km  —◇— 1200 km

**European Patent Office**

**EUROPEAN SEARCH REPORT**

Application Number

EP 05 01 4381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 701 339 A (SIEMENS AKTIENGESELLSCHAFT) 13 March 1996 (1996-03-13) * column 3, line 43 - column 4, line 14; figures 1,2a-2e * ----- | 1,11 | H04B10/18 H04B10/155 |
| A | SIEBEN M ET AL: "OPTICAL SINGLE SIDEBAND TRANSMISSION AT 10 GB/S USING ONLY ELECTRICAL DISPERSION COMPENSATION" JOURNAL OF LIGHTWAVE TECHNOLOGY, IEEE SERVICE CENTER, NEW YORK, NY, US, vol. 17, no. 10, October 1999 (1999-10), pages 1742-1749, XP001033235 ISSN: 0733-8724 * page 1744, right-hand column, paragraph 2 * * page 1745, left-hand column, paragraph 2-4 * ----- | 2,12 | |

TECHNICAL FIELDS SEARCHED (IPC)

H04B

The present search report has been drawn up for all claims

| Place of search | Date of completion of the search | Examiner |
|---|---|---|
| The Hague | 29 November 2005 | Cochet, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 739 865 A1**

## ANNEX TO THE EUROPEAN SEARCH REPORT
## ON EUROPEAN PATENT APPLICATION NO.

EP 05 01 4381

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2005

| Patent document cited in search report | | Publication date | Patent family member(s) | | Publication date |
|---|---|---|---|---|---|
| EP 0701339 | A | 13-03-1996 | DE | 4429286 A1 | 22-02-1996 |
| | | | JP | 8079172 A | 22-03-1996 |

EPO FORM P0459

For more details about this annex : see Official Journal of the European Patent Office, No. 12/82

13

## REFERENCES CITED IN THE DESCRIPTION

### Patent documents cited in the description

- WO 200432385 A1
- US 6292598 B1
- DE 19926124 A1

### Non-patent literature cited in the description

- **MIKE SIEBEN.** Optical Single Sideband Transmission at 10 Gbit/s Using Only Electrical Dispersion Compensation. *Journal of Lightwave Technology,* October 1999, vol. 17 (10), 1742-1749
- *Journal of Lightwave Technology,* May 1998, vol. 16 (5), 788-796